# EUROPÄISCHE PATENTSCHRIFT

(11) **EP 1 439 985 B1**
(45) Veröffentlichungstag und Bekanntmachung des Hinweises auf die Patenterteilung: **21.12.2005**
(21) Anmeldenummer: 02781130.6
(22) Anmeldetag: 07.10.2002
(51) Int. Cl.: B60R 21/01

(54) **VORRICHTUNG MIT EINEM GASKISSEN INSBESONDERE FÜR EIN KRAFTFAHRZEUG**
DEVICE COMPRISING A GAS CUSHION, IN PARTICULAR FOR A MOTOR VEHICLE
DISPOSITIF DOTE D'UN COUSSIN DE GAZ ET DESTINE NOTAMMENT A UN VEHICULE AUTOMOBILE

(30) Priorität: 30.10.2001 DE 10153503
(43) Veröffentlichungstag der Anmeldung: 28.07.2004
(73) Patentinhaber: SIEMENS AKTIENGESELLSCHAFT, 80333 München (DE)
(72) Erfinder: ZECHA, Stephan, 63768 Hösbach (DE)
(86) Internationale Anmeldenummer: PCT/DE2002/003787
(87) Internationale Veröffentlichungsnummer: WO 2003/039918

(56) Entgegenhaltungen:
- EP-A- 0 958 974
- WO-A-00/51849
- DE-A- 10 001 086
- DE-A- 19 610 833
- DE-A- 19 913 095

## Beschreibung

Das Entfaltungsverhalten eines Gaskissens in einem Kraftfahrzeug ist üblicherweise für eine Situation bestimmt, bei der der Fahrzeugfahrer oder ein Beifahrer von den Sicherheitsgurten gehalten an der Rücklehne des Sitzes angelehnt ist, also eine gewisse Entfernung zum sich in einer Aufprallsituation entfaltenden Gaskissen hat und üblicherweise in das bereits aufgeblasene Gaskissen fällt. Es kann jedoch vorkommen, dass sich der Fahrer oder ein Beifahrer in einer Aufprallsituation gerade nach vorne lehnt und dadurch von dem sich entfaltenden Gaskissen getroffen wird. Diese sogenannte Out-of-Position-(OoP)-Situation hat schon zu schwereren Verletzungen geführt als sie allein durch den eigentlichen Aufprall ohne Gaskissen erfolgt wären. Es wurden daher bereits Konzepte entwickelt, die das Entfaltungsverhalten des Gaskissens detektieren und bei einem Hindernis im Entfaltungsbereich des Gaskissens, welches zu einer verminderten oder gar gehemmten Entfaltung führt, ein weiteres Aufblasen des Gaskissens verhindern.

Aus der EP 0 812 741 A1 ist eine Vorrichtung bekannt, bei der das Gaskissen mit Abfrageeinheiten versehen ist, die als Fäden oder Bänder ausgebildet sind und eine abtastbare Codierung aufweisen. Mit der Entfaltung des Gaskissens werden die Fäden oder Bänder mit der Geschwindigkeit der Gaskissenfront mitgeführt und erstrecken sich mit einer entsprechenden Länge im Inneren des Gaskissens. Eine Auswerteeinrichtung tastet die Codierung entweder mechanisch oder auch kapazitiv, induktiv, optisch oder dergl. ab und kann auf diese Weise feststellen, ob sich ein Hindernis im Entfaltungsbereich des Gaskissens befindet. Falls ein solches Hindernis detektiert wird, wird die Gaszufuhr reduziert oder gar gestoppt, um eine Verletzung einer das Hindernis bildenden Person zu vermeiden.

Probleme der bekannten Vorrichtung sind jedoch eine aufwändige und damit teure Herstellung und eine nicht befriedigende Reproduzierbarkeit des Messergebnisses.

Die gattungsbildende DE 199 13 095 A1 offenbart eine Vorrichtung mit einem durch eine Fülleinrichtung mit Gas aufblasbaren Gaskissen sowie einer Sende-/Empfangseinrichtung für elektromagnetische Wellen und einer mit dieser verbundenen Auswerteeinrichtung, wobei an dem Gaskissen zumindest eine Abfrageeinheiten angeordnet ist, die von der Sende-/Empfangseinrichtung kontaktlos abfragbar ist und dadurch in der Auswerteeinrichtung Informationen über den Entfaltungsgrad und/oder die Entfaltungsgeschwindigkeit des Gaskissens bereitgestellt sind.

Die Abfrageeinheit ist dabei durch eine reflektierende Schicht, die auf der Innenseite des Airbags ausgebildet ist, versehen und reflektiert einen Lichtstrahl von einem Lichtsender zu einem Lichtempfänger. Die empfangene Lichtintensität ist dabei abhängig vom Entfaltungsgrad des Airbags. Dabei kann die Entfaltung eines Airbags jedoch nur sehr grob abgeschätzt werden.

Die Aufgabe vorliegender Erfindung ist es daher, eine Vorrichtung der vorgenannten Art anzugeben, die diese Probleme vermeidet.

Die Aufgabe wird durch eine Vorrichtung gemäß einem der nebengeordneten Ansprüche 1 oder 2 gelöst. Vorteilhafte Weiterbildungen der Erfindung sind im Unteranspruch angegeben.

Demgemäß ist die erfindungsgemäße Vorrichtung mit einer Sende-/Empfangseinrichtung für elektromagnetische Wellen ausgebildet, die vorzugsweise im Armaturenbrett eines die Vorrichtung aufweisenden Fahrzeugs angeordnet ist. Die Sende-/Empfangseinrichtung sendet elektromagnetische Wellen an eine oder mehrere am Gaskissen angeordnete Abfrageeinheiten, die ihrerseits eine eine jeweilige Abfrageeinheit kennzeichnende Welle zurücksenden, die von der Sende-/Empfangseinheit empfangen und von einer mit der Sende-/Empfangseinheit verbundenen Auswerteeinrichung verarbeitet und ausgewertet wird bzw. werden, um eine geeignete Reaktion auf das Entfaltungsverhalten des Gaskissens herbeiführen zu können.

Die Entfaltungsgeschwindigkeit kann auf relativ einfache und dennoch genaue und sehr einfach reproduzierbare Weise aus der Dopplerverschiebung der von den Abfrageeinheiten kommenden Wellen ermittelt werden.

Eine Abfrageeinheit ist dabei gemäß Anspruch 1 mit einem polarisierenden, vorzugsweise zirkular polarisierenden Reflektor gebildet. Wenn entgegen gesetzte Polarisierungen gewählt werden, können bereits zwei Abfrageeinheiten unterschieden werden.

Um eine größere Anzahl von Abfrageeinheiten unterscheiden bzw. erkennen zu können, ist es vorteilhaft, diese gemäß Anspruch 2 als Transponder auszubilden, also als Einheiten, die die von der Sende-/Empfangseinrichung kommende Welle empfangen, zumindest einen Teil deren Energie als Versorgungsenergie zur Versorgung einer Logikschaltung speichern und eine kodierte also mit einem Code modulierten Welle zurücksenden.

Die Logikschaltung kann dabei in einfachster Weise als Schalter ausgebildet sein, der lediglich eine Sende-/Empfangsantenne gemäß einem gespeicherten Code ein- oder ausschaltet. Es ist jedoch auch eine kompliziertere Logikschaltung denkbar, die eine entsprechend kompliziertere Codierung ermöglicht. Beispielsweise kann die Logikschaltung auch mit einem Oszillator gebildet sein, der aktiv ein Signal erzeugt, das auf Anregung durch ein Signal bzw. eine Welle von der Sende-/Empfangseinrichtung als Welle zur Sende-/Empfangseinrichtung zurückgestrahlt wird. Hierbei kann jede Abfrageeinheit auf einer unterschiedlichen Frequenz strahlen. Es ist ebenso möglich verschiedene Modulationen bei gleicher Frequenz zu verwenden oder etwas Ähnliches. Wesentlich ist jedenfalls, dass die Signale der einzelnen Abfrageeinheiten von der Sende-/Empfangseinrichung unterschieden werden können.

Die Erfindung wird nachfolgend anhand eines Ausführungsbeispiels mittels einer Figur näher erläutert.

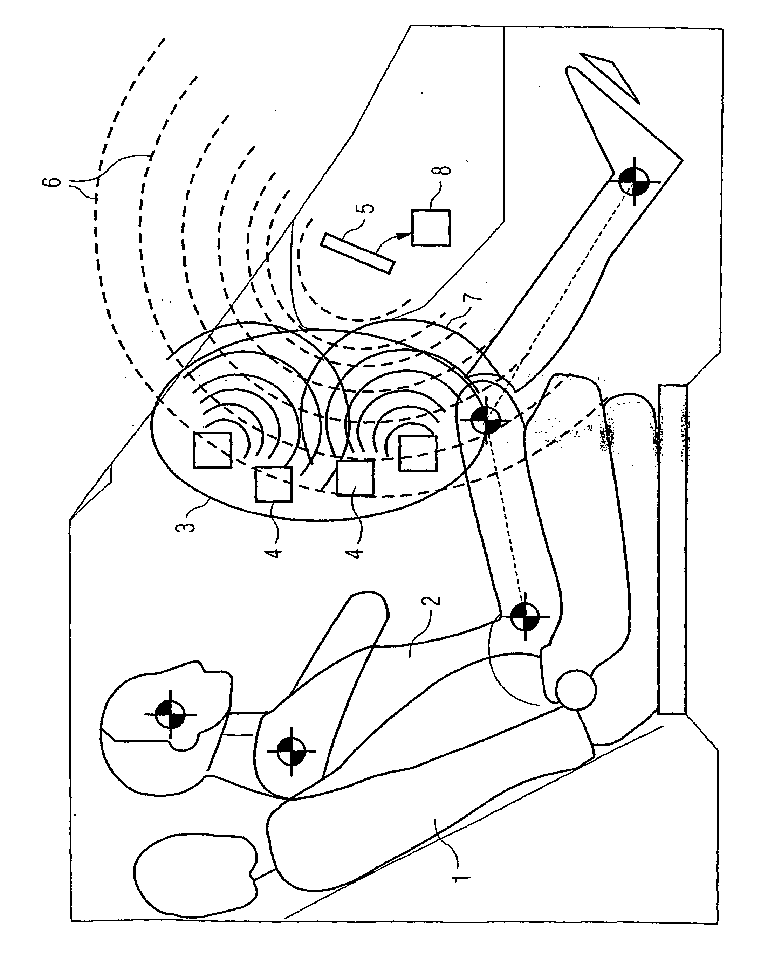

Die Figur zeigt eine schematische Querschnittsdarstellung eines Fahrzeugcockpits mit einem Sitz 1 und einer darauf sitzenden Person 2. Ein aufgeblasenes Gaskissen 3 ist mit einer Anzahl von Abfrageeinheiten 4 ausgebildet, die als einfache Reflektoren oder als Transponder ausgebildet sein können. Informationen über geeignete Transponder können der Internetseite "http://rapidttp.com/transponder/" entnommen werden. Eine Sende-/Empfangseinrichtung 5, die mit einer Auswerteeinrichtung (8) verbunden ist, sendet elektromagnetische Wellen 6 an die Abfrageeinheiten 4. Diese senden geeignet kodierte Wellen 7 zurück, die von der Sende-/Empfangseinrichtung 5 empfangen und von der Auswerteeinrichtung (8) verarbeitet werden.

## Patentansprüche

1. Vorrichtung mit einem durch eine Fülleinrichtung mit Gas aufblasbaren Gaskissen (3) sowie einer Sende-/Empfangseinrichtung (5) für elektromagnetische Wellen (6) und einer mit dieser verbundenen Auswerteeinrichtung (8), wobei an dem Gaskissen (3) zumindest eine Abfrageeinheit (4) angeordnet ist, die von der Sende-/Empfangseinrichtung (5) kontaktlos abfragbar ist und **dadurch** in der Auswerteeinrichtung (8) Informationen über den Entfaltungsgrad und/oder die Entfaltungsgeschwindigkeit des Gaskissens (3) bereitgestellt sind,
**dadurch gekennzeichnet,**
**dass** eine Abfrageeinheit (3) mit einem polarisierenden Reflektor gebildet ist.

2. Vorrichtung mit einem durch eine Fülleinrichtung mit Gas aufblasbaren Gaskissen (3) sowie einer Sende-/Empfangseinrichtung (5) für elektromagnetische Wellen (6) und einer mit dieser verbundenen Auswerteeinrichtung (8), wobei an dem Gaskissen (3) zumindest eine Abfrageeinheit (4) angeordnet ist, die von der Sende-/Empfangseinrichtung (5) kontaktlos abfragbar ist und **dadurch** in der Auswerteeinrichtung (8) Informationen über den Entfaltungsgrad und/oder die Entfaltungsgeschwindigkeit des Gaskissens (3) bereitgestellt sind,
**dadurch gekennzeichnet,**
**dass** eine Abfrageeinheit (3) mit einem Transponder gebildet ist.

3. Vorrichtung nach Anspruch 2, **dadurch gekennzeichnet, dass** ein Transponder mit einer Logikschaltung ausgebildet ist, die die Rücksendung einer kodierten Welle (7) zur Sende-/Empfangseinrichtung (5) ermöglicht.

## Claims

1. Device comprising a gas cushion (3) which can be inflated with gas by means of a filling device, as well as a transceiver (5) for electromagnetic waves (6) and an evaluation device (8) connected to this transceiver, wherein there is disposed on the gas cushion (3) at least one interrogation unit (4) which can be interrogated in a contactless manner by the transceiver (5) and as a result information about the degree of deployment and/or the deployment velocity of the gas cushion (3) is provided in the evaluation device (8),
**characterised in that**
an interrogation unit (3) is implemented with a polarising reflector.

2. Device comprising a gas cushion (3) which can be inflated with gas by means of a filling device, as well as a transceiver (5) for electromagnetic waves (6) and an evaluation device (8) connected to this transceiver, wherein there is disposed on the gas cushion (3) at least one interrogation unit (4) which can be interrogated in a contactless manner by the transceiver (5) and as a result information about the degree of deployment and/or the deployment velocity of the gas cushion (3) is provided in the evaluation device (8),
**characterised in that**
an interrogation unit (3) is implemented with a transponder.

3. Device according to claim 2, **characterised in that**
a transponder is implemented by means of a logic circuit which enables an encoded wave (7) to be transmitted back to the transceiver (5).

## Revendications

1. Dispositif comportant un coussin pneumatique (3) pouvant être gonflé par du gaz au moyen d'un dispositif de remplissage, ainsi qu'un dispositif d'émission et de réception (5) pour des ondes électromagnétiques (6) et un dispositif d'interprétation (8) relié à ce dernier, au moins une unité d'interrogation (4) étant disposée sur le coussin pneumatique (3), cette unité d'interrogation (4) pouvant être interrogée sans contact par le dispositif d'émission et de réception (5) et, de ce fait, des informations sont mises à disposition, dans le dispositif d'interprétation (8), sur le degré de déploiement et sur la vitesse de déploiement du coussin pneumatique (3),
**caractérisé en ce qu'**une unité d'interrogation (3) est réalisée avec un réflecteur polarisant.

2. Dispositif comportant un coussin pneumatique (3) pouvant être gonflé par du gaz au moyen d'un dispositif de remplissage, ainsi qu'un dispositif d'émission et de réception (5) pour des ondes électromagnétiques (6) et un dispositif d'interprétation (8) relié à ce dernier, au moins une unité d'interrogation (4) étant disposée sur le coussin pneumatique (3), cette unité d'interrogation (4) pouvant être interrogée sans contact par le dispositif d'émission et de réception (5) et, de ce fait, des informations sont mises à disposition, dans le dispositif d'interprétation (8), sur le degré de déploiement et sur la vitesse de déploiement du coussin pneumatique (3),
**caractérisé en ce qu'**une unité d'interrogation (3) est réalisée avec un transpondeur.

3. Dispositif suivant la revendication 2,
**caractérisé en ce qu'**un transpondeur est réalisé avec un circuit logique qui permet de réémettre une onde codée (7) vers le dispositif d'émission et de réception (5).0
